(19) Europäisches Patentamt
European Patent Office
Office européen des brevets

(11) **EP 2 553 535 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **10717566.3**

(22) Anmeldetag: **29.03.2010**

(51) Int Cl.:
***G05B 13/04*** *(2006.01)*

(86) Internationale Anmeldenummer:
**PCT/EP2010/054118**

(87) Internationale Veröffentlichungsnummer:
**WO 2011/120552 (06.10.2011 Gazette 2011/40)**

(54) **ENGINEERING-WERKZEUG UND VERFAHREN ZUR PARAMETRIERUNG EINES MODELLBASIERTEN PRÄDIKTIVREGLERS**

ENGINEERING TOOL AND METHOD FOR PARAMETERIZING A MODEL-BASED PREDICTIVE CONTROLLER

OUTIL D'INGÉNIERIE ET PROCÉDÉ POUR PARAMÉTRER UN RÉGULATEUR DE TYPE PRÉDICTIF BASÉ SUR MODÈLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**06.02.2013 Patentblatt 2013/06**

(73) Patentinhaber: **Siemens Aktiengesellschaft 80333 München (DE)**

(72) Erfinder:
• **LOHNER, Lena 76187 Karlsruhe (DE)**
• **PFEIFFER, Bernd-Markus 76744 Wörth (DE)**

(56) Entgegenhaltungen:
• WILLY WOJSZNIS: "Developing confidence intervals for process model validation", INTERNET CITATION, 1. Januar 2002 (2002-01-01), XP009140910, Gefunden im Internet: URL:http://www.easydeltav.com/repository/i sa/wwam.pdf ORD - 2002-00-00 [gefunden am 2010-11-05] in der Anmeldung erwähnt
• WOJSZNIS ET AL: "Practical approach to tuning MPC", ISA TRANSACTIONS, INSTRUMENT SOCIETY OF AMERICA. PITTSBURGH, US LNKD-DOI:10.1016/S0019-0578(07)60121-9, Bd. 42, Nr. 1, 1. Januar 2003 (2003-01-01) , Seiten 149-162, XP005835377, ISSN: 0019-0578 in der Anmeldung erwähnt

**Beschreibung**

Die Erfindung betrifft ein Engineering-Werkzeug zur Parametrierung eines modellbasierten Prädiktivreglers gemäß dem Oberbegriff des Anspruchs 1 sowie ein entsprechendes Verfahren.

Modellbasierte Prädiktivregler (englisch: Model Predictive Control, MPC) werden häufig eingesetzt, um Mehrgrößensysteme in der Prozessautomatisierung zu regeln. Dabei liegen die Vorteile des MPC nicht nur in der Handhabung von verkoppelten Mehrgrößensystemen, sondern auch in der Berücksichtigung von messbaren Störungen in seiner modellbasierten Berechnung der notwendigen Stellgrößen. Der MPC unterscheidet sich von einem PID-Regler beispielsweise darin, dass er seine Stellgrößen nicht nur aufgrund aktueller Messdaten berechnet, sondern dabei das erwartete Prozessverhalten selbst einfließen lässt und nicht nur die aktuellen Abweichungen zwischen Regelgrößen und Sollwerten, sondern auch die innerhalb eines Horizontes liegenden zukünftigen Werte berücksichtigt. Bezüglich weiterer Einzelheiten zu modellbasierten Prädiktivreglern wird auf das von der Siemens AG veröffentlichte White Paper "Wie verbessern Sie die Performance Ihrer Anlage mit Hilfe der passenden Funktionen aus dem SIMATIC PCS 7 APC-Portfolio?", Oktober 2008, verwiesen.

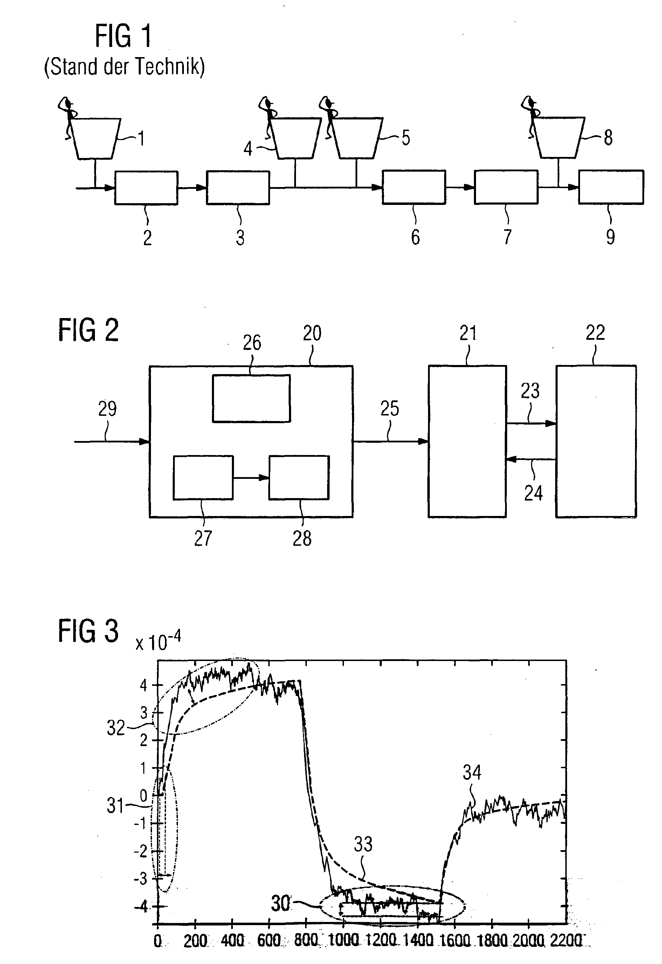

In diesem White Paper ist zudem ein Engineering-Werkzeug beschrieben, das den Anwender beim Entwurf des modellbasierten Prädiktivreglers unterstützt und als MPC-Konfigurator bezeichnet wird. Anhand Figur 1 wird die Funktionsweise des bekannten MPC-Konfigurators kurz erläutert. In einem Schritt 1 wird zunächst durch einen Bediener eine Auswahl geeigneter Messdaten des zu regelnden verfahrenstechnischen Prozesses getroffen. Diese Messdaten werden in einem Schritt 2 eingelesen und anhand der Messdaten in einem Schritt 3 ein Modell, das bei einem Mehrgrößenregler aus mehreren Teilübertragungsfunktionen besteht, identifiziert. Das identifizierte Modell wird in einem Schritt 4 durch den Bediener visuell bewertet. In einem Schritt 5 gibt der Bediener die Gewichtungsfaktoren für ein Gütekriterium vor, dessen Minimierung das Ziel des modellbasierten Prädiktivreglers ist. In dem Gütekriterium werden entsprechend den Gewichtungsfaktoren Regelgrößen gewichtet und Stellgrößenänderungen bestraft. In einem Schritt 6 wird basierend auf dem Gütekriterium der modellbasierte Prädiktivregler berechnet, dessen Funktion in einem Schritt 7 validiert und in einem Schritt 8 von dem Bediener bewertet wird. Bei ausreichender Performance werden die gewonnenen Reglerparameter aus dem Engineering-Werkzeug in einem Schritt 9 exportiert und in ein Reglermodul eines Automatisierungsgeräts, welches zur Automatisierung der verfahrenstechnischen Anlage dient, geladen. Die im Schritt 5 vorgenommene Eingabe von Gewichtungsfaktoren stellt für Bediener häufig ein Problem dar, da die Wahl der Einstellung nicht immer leicht zu treffen ist und oft zu mehreren "trial and error"-Versuchen führt. Dies ist insbesondere bei komplexen Problemstellungen der Fall. Da solche Testdurchläufe in Anlagen der Prozessindustrie zeit- und kostenintensiv sind, werden Anwender dadurch häufig von einem Einsatz eines MPC abgeschreckt. Daher wäre ein Engineering-Werkzeug von besonderem Vorteil, mit welchem nicht nur die Identifikation des Modells und die Berechnung des Reglers sondern auch die Bestimmung der Gewichtungsfaktoren automatisch durchgeführt werden kann.

Der bekannte modellbasierte Mehrgrößenregler berechnet seine Stellgrößen auf der Grundlage der Minimierung des folgenden Gütemaßes:

$$J = \left( \vec{\underline{w}} - \vec{\underline{y}} \right)^{T} \underline{R} \left( \vec{\underline{w}} - \vec{\underline{y}} \right) + \Delta \vec{\underline{u}}^{T} \underline{Q} \Delta \vec{\underline{u}} \ .$$

Dabei wird die Abweichung der Regelgrößen $\underline{y}$ von den Sollgrößen $\underline{w}$ mit der Diagonalmatrix $\underline{R}$ und die Stellgrößenänderungen mit der Diagonalmatrix $\underline{Q}$ bestraft. Die Diagonalelemente der Matrix $\underline{R}$ bestimmen die Priorität der verschiedenen Regelgrößen untereinander während die Diagonalelemente der Matrix $\underline{Q}$ die Stärke des Regeleingriffs für die verschiedenen Stellkanäle vorgeben. Ein kleines $q_{ii}$ ermöglicht dabei einen starken und ein großes $q_{ii}$ einen schwachen Stelleingriff.

Die Minimierung dieses Gütemaßes ergibt folgende Reglergleichung zur Berechnung der Stellgrößenänderungen:

$$\Delta \vec{\underline{u}} = \underline{C}(\vec{\underline{w}} - \vec{\underline{f}}) \ \text{mit} \ \underline{C} = (\underline{G}^{T} \underline{R} \underline{G} + \underline{Q})^{-1} \underline{G}^{T} \underline{R} \ .$$

Dabei stellen $\vec{f}$ die freien Bewegungen des Prozesses dar und $\underline{G}$ die Matrix der Sprungantwortkoeffizienten des Prozessmodells.

Aus dem Aufsatz von Wojsznis, W., Gudaz, J., Mehta, A., Blevnis, T., "Practical Approach to Tuning MPC", ISA Transactions 2003 und dem Aufsatz von Wojsznis, W., Mehta, A., "Developing Confidence Intervals for Process Model Validation", ISA Conference 2002, ist bereits ein Engineering-Werkzeug zur Parametrierung eines modellbasierten Prädiktivreglers bekannt, welches Mittel zur Bestimmung der Güte des Modells aufweist, das der modellbasierte Prädiktivregler für das Verhalten des zu regelnden Prozesses enthält, und durch welches Gewichtungsfaktoren automatisch bestimmt werden, mit denen in einem Gütekriterium, dessen Minimierung das Entwurfsziel des Reglers ist, Stellgrößenänderungen gewichtet werden. Um die Güte des Modells zu bestimmen, wird dort eine Singulärwertzerlegung der Messdaten durchgeführt. Daraus werden die Standardabweichungen der Modellparameter unter Annahme einer Normalverteilung bestimmt. Über die Definition von Vertrauensintervallen resultiert daraus ein Unsicherheitsband der Sprungantwort. Für die Parametrierung der Stellgrößenbestrafungen wurde eine empirische Studie durchgeführt, welche in einer Berechnungsformel für die Gewichtungsfaktoren resultiert, in welcher Parameter und deren Abweichungen von PT1Tt-Modellen vorkommen, die zur Modellierung des Prozessverhaltens dienen. In nachteiliger Weise handelt es sich dabei um eine empirische Lösung für die Bestimmung der Gewichtungsfaktoren, die infolgedessen keine Allgemeingültigkeit besitzen.

Der Erfindung liegt die Aufgabe zugrunde, ein Engineering-Werkzeug zu schaffen, mit welchem eine verbesserte automatische Berechnung sinnvoller Gewichtungsfaktoren, mit welchen in einem Gütekriterium Stellgrößenänderungen gewichtet werden, ermöglicht wird, so dass die Robustheit eines mit dem Engineering-Werkzeug parametrierten, modellbasierten Prädiktivreglers verbessert wird.

Zur Lösung dieser Aufgabe weist das neue Engineering-Werkzeug der eingangs genannten Art die im kennzeichnenden Teil des Anspruchs 1 angegebenen Merkmale auf. In den Unteransprüchen sind vorteilhafte Weiterbildungen, in Anspruch 4 ein entsprechendes Verfahren beschrieben.

Die Erfindung hat den Vorteil, dass zur Festlegung von Gewichtungsfaktoren in einem Gütekriterium, dessen Minimierung das Ziel des modellbasierten Prädiktivreglers ist, keinerlei regelungstechnisches Know-how eines Bedieners erforderlich ist. Dadurch wird die Nutzbarkeit modellbasierter Prädiktivregler und somit auch ihre Verbreitung deutlich erhöht. Die Aggressivität und somit auch die Robustheit des Reglers werden über die Bestrafung der Stellgrößenänderungen beeinflusst. Liegt dem Regler ein Modell mit hoher Genauigkeit zugrunde, so kann für eine hohe Performance des Reglers ein starker Stelleingriff erfolgen. Sind dagegen hohe Modellunsicherheiten vorhanden und somit die berechneten Stelleingriffe des Reglers nicht immer genau korrekt, so würde ein starker Stelleingriff zu einer Schwingung im Verlauf der Stellgrößen oder sogar zu einer Instabilität im Prozess führen. Für die Sicherstellung der Stabilität und der Performance des Regelkreises wird daher der Stelleingriff reduziert. Dies gelingt durch Anhebung der Gewichtungsfaktoren.

Gegenüber einer Vorgabe der Gewichtungsfaktoren durch einen Bediener hat das neue Engineering-Werkzeug den Vorteil, dass auf aufwendige Testreihen verzichtet werden kann und somit eine deutliche Zeit- und Kostenersparnis erzielt wird. Die automatische Bestimmung der Gewichtungsfaktoren auf der Basis eines analytischen Ansatzes liefert meist bessere Ergebnisse als eine manuelle Parametrierung des Gütekriteriums durch einen Fachexperten.

In einer besonders vorteilhaften Ausgestaltung des Engineering-Werkzeugs sind die Mittel zur Bestimmung der Güte des Modells dazu ausgebildet, bei Stellgrößensprüngen in Messdaten, die an dem zu regelnden verfahrenstechnischen Prozess aufgenommen sind, entsprechende Stellgrößensprünge auf das Modell, welches auch der modellbasierte Regler zur Simulation des Prozesses verwendet, aufzuschalten und die Sprungantworten des Prozesses mit den jeweils entsprechenden Sprungantworten der Teilübertragungsfunktionen des Prozessmodells zu vergleichen. Für eine Auswertung der so gewonnenen Fehler werden die Teilübertragungsfunktionen des Modells des Reglers durch PT1Tt-Modelle approximiert. Diese Fehleruntersuchung entspricht in vorteilhafter Weise einer detaillierten graphischen Modellanalyse, die leicht verständlich ist, da sie einer Untersuchung mit dem geschulten Auge entspricht. Die Bestimmungen der Güte des Modells ist damit für den Anwender verständlich und sehr gut nachvollziehbar. Damit ist eine weitere Schwierigkeit beim Einsatz und der Verwendung eines MPC überwunden, nämlich die Identifikation eines geeigneten Modells. Gelänge dies nicht mit der benötigten Genauigkeit, würde dies zu erheblichen Einbußen in der Performance des Regelkreises und bei signifikanten Fehlern sogar zu Stabilitätsproblemen führen. Die Robustheit des Reglers spielt bei der Anwendung des MPC eine erhebliche Rolle. Sie bedeutet dabei eine Robustheit bestimmter Eigenschaften wie Stabilität und Performance gegenüber Modellfehlern. Die Berücksichtigung der Robustheit bereits beim Entwurf des MPC mit Hilfe des Engineering-Werkzeugs stellt somit einen großen Vorteil für einen erfolgreichen Einsatz des MPC dar.

In einer weiteren, besonders vorteilhaften Ausgestaltung des Engineering-Werkzeugs werden die automatisch bestimmten Gewichtungsfaktoren nicht unmittelbar für den Reglerentwurf herangezogen, sondern können zuvor durch einen Bediener an einem Bediengerät, auf welches sie ausgegeben werden, verändert werden. Damit hat der Bediener die Möglichkeit, sein Erfahrungswissen auch in diesem Schritt des Engineerings einzubringen.

Anhand der Figuren 2 bis 6, in denen ein Ausführungsbeispiel der Erfindung dargestellt ist, werden im Folgenden die Erfindung sowie Ausgestaltungen und Vorteile näher erläutert.

Es zeigen:

Figur 1    Funktionen des bekannten MPC-Konfigurators,

Figur 2    einen Prozess mit einem modellbasierten Prädiktivregler und Engineering-Werkzeug,

Figur 3    das Prinzip der Bestimmung der Modellgüte,

Figur 4    Funktionen des neuen Engineering-Werkzeugs,

Figur 5    eine Bedienoberfläche des Engineering-Werkzeugs und

Figur 6    eine Bedienoberfläche zur Eingabe von Änderungen an vorgeschlagenen Gewichtungsfaktoren.

In Figur 2 ist ein Engineering-Werkzeug 20 zusammen mit einem modellbasierten Prädiktivregler 21 und einem zu regelnden verfahrenstechnischen Prozess 22 dargestellt. Der Prozess 22 ist mit Stellgliedern und Messumformern ausgestattet. Im Betrieb gibt der Prädiktivregler 21 Stellgrößen 23 an den Prozess 22 aus und erfasst am Prozess 22 mit Hilfe der Messumformer gemessene Regelgrößen 24. Die Einstellung von Matritzen 25 für Reglergleichungen des modellbasierten Prädiktivreglers 21 erfolgt mit Hilfe des Engineering-Werkzeugs 20, welches diese weitgehend automatisch berechnet, so dass auf regelungstechnisches Know-how einer Bedienperson weitgehend verzichtet werden kann. Damit dennoch Erfahrungswissen eines Bedieners in die Berechnung einfließen kann, ist das Engineering-Werkzeug 20 mit einem Bediengerät 26 ausgestattet. Weiterhin sind Mittel 27 zur Bestimmung der Güte eines identifizierten Prozessmodells und Mittel 28 zur Bestimmung von Gewichtungsfaktoren, mit denen in einem Gütekriterium, dessen Minimierung das Entwurfsziel des modellbasierten Prädiktivreglers 21 ist, Stellgrößenänderungen gewichtet werden, Bestandteile des Engineering-Werkzeugs 20. Die Mittel 27 und 28 sind durch Software-Bausteine der Engineering-Software des Engineering-Werkzeugs 20 realisiert. Zur Identifikation des Prozessmodells und zur Bestimmung seiner Güte verwendet das Engineering-Werkzeug 20 Messdaten 29, die zu diesem Zweck eingelesen werden.
Das Engineering erfolgt in mehreren Schritten.
Erster Schritt: Automatische Bestimmung der Gewichtungsfaktoren $q_{ii}$ für den Idealfall, in welchem das Prozessmodell des Reglers dem wahren Prozessverhalten entspricht und keine Modellfehler aufweist:

Der bekannte Ansatz im MPC-Konfigurator, lediglich die Größenordnungen der Wertebereiche der einzelnen Stellkanäle zu berücksichtigen führt nicht immer zum gewünschten Ziel, da die Verstärkung der betrachteten Teilübertragungsfunktion einen ebenso großen Einfluss auf die Auswirkung von Stellgrößenänderungen zeigt. Daher müssen in Abhängigkeit des Prozessverhaltens für jeden Stellkanal geeignete Parameter bestimmt werden.

Zur Wahl der Parameter des MPC gibt es einige Faustregeln und dementsprechende Literatur. Der in dieses Konzept eingebundene Algorithmus stammt aus den Veröffentlichungen von Shridhar, R., Cooper, D. J., "A Tuning Strategy for Unconstrained SISO Model Predictive Control", Ind. Eng. Chem. Res., Bd. 36, Seiten 729 - 746, 1997 (SISO-Fall) und "A Tuning Strategy for Unconstrained Multivariable Model Predictive Control", Ind. Eng. Chem. Res., Bd. 37, Seiten 4003 - 4016, 1998 (MIMO-Fall). Die dort hergeleiteten analytischen Berechnungen ergeben sich aus dem Ziel, eine gute Performance sowie einen moderaten Stellgrößeneingriff zu erzielen. Dafür wurde der Ansatz gewählt, die Konditionszahl der in der Reglergleichung zu invertierenden Matrix auf einen Zielwert zu projizieren. Die Konditionszahl ist das Verhältnis des größten zum kleinsten Singulärwert der Matrix. Je größer die Konditionszahl, desto schwerer lässt sich die Matrix invertieren.
Diese Konditionszahl beschreibt den Einfluss von Prädiktionsfehlern auf die berechneten Stellgrößenänderungen. Für MIMO-Systeme ergibt sich damit die analytische Berechnung, bei der die einzelnen Q-Werte innerhalb eines Stellgrößenkanals für alle Regelgrößen y aufsummiert werden.

$$Q = \sum_{y} \frac{n_c}{C_{ond}} \left( RK^2 \left( n_p - \left( \frac{\tau}{T} + 1 \right) - \frac{3T_d}{2T} + 2 - \frac{n_c - 1}{2} \right) \right),$$

mit Regelhorizont $n_c$, Prädiktionshorizont $n_p$, Regelgrößengewichtung $R$, Abtastzeit $T$, Konditionszahl $C_{ond}$, Verstärkung $K$, Totzeit $\tau$ und Zeitkonstante $T_d$.

Zweiter Schritt: Bestimmung der Modellgüte:

Im nächsten Schritt muss die Modellgüte bzw. die Modellunsicherheiten des identifizierten Modells abgeschätzt werden. Dazu werden die vom Anwender aufgezeichneten Daten, die Stellgrößensprünge enthalten, als Sprungantworten interpretiert. Durch ein Aufschalten derselben Stellgrößensprünge auf die identifizierten Teilübertragungsfunktionen können zu den Sprungantworten der Messdaten auch solche der Simulationsdaten generiert werden. Ein Vergleich der jeweiligen Sprungantworten hinsichtlich Amplitude, Zeitverzögerung und Anstiegsverhalten liefert eine Aussage über die Modellgüte. Um diese präzise auswerten zu können, werden die vom MPC-Konfigurator generierten Modelle mit PT1Tt-Modellen (Verzögerung erster Ordnung mit Totzeit) approximiert:

$$g_{ij}(s) = \frac{K}{1 + T_d s} e^{-\tau s} .$$

In dem Zeitdiagramm gemäß Figur 3 sind die Simulationsdaten durch einen Verlauf 33 und die Messdaten in einem Verlauf 34 dargestellt.

Eine Abweichung 30 in der Amplitude entspricht gemäß der in Figur 3 verdeutlichten Fehlerdefinition somit einem Delta im Verstärkungsfaktor $K$, eine Abweichung 31 in der Zeitverzögerung entspricht unterschiedlichen Totzeiten $\tau$ und ein Unter-schied 32 im Anstiegsverhalten entspricht verschiedenen Zeitkonstanten $T_d$. Diese Schwankungen in den Parametern können auf Schwankungen in den Sprungantworten zurückgeführt werden.

Dritter Schritt: Bestimmung der Gewichtungsfaktoren $q_{ii}$ für ein robustes Verhalten

Anhand der Modellqualität bzw. der Modellunsicherheiten kann im nächsten Schritt auf die benötigten Minimalwerte der Gewichtungsfaktoren $q_{ii}$ der Stellgrößenbestrafung geschlossen werden. Dazu wird der neuartige Ansatz gewählt, die Stärke des Stellgrößeneingriffs im "worst-case"-Fall (bei einem maximalen Fehler, der das ungünstigste Verhalten des Reglers hervorruft) der Stärke im Idealfall anzupassen.

Um geeignete Q-Werte vorzuschlagen sowie die Robustheit mit zu berücksichtigen, wird der bereits existierende, anhand Fig. 1 erläuterte MPC-Konfigurator erweitert.

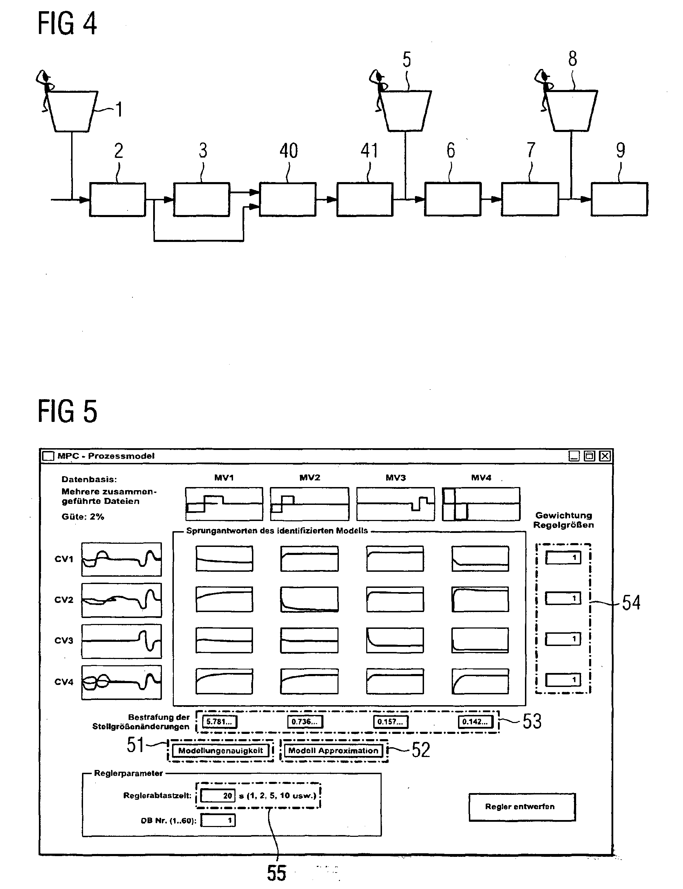

Die Funktionen des neuen Engineering-Werkzeugs sind in Figur 4 verdeutlicht. In den Figuren 1 und 4 sind einander entsprechende Funktionsbausteine mit gleichen Bezugszeichen versehen. Im neuen Engineering-Werkzeug wird im Anschluss an die Modellidentifikation 3 eine detaillierte Bestimmung 40 der Modellgüte sowie eine Berechnung 41 eines Parametriervorschlages für die Gewichtung der Stellgrößenänderungen durchgeführt. Den so gewonnenen Vorschlag für eine Parametrierung kann der Anwender mit Hilfe einer Funktion 5 vor der Reglerberechnung 6 nach Belieben abändern, um seine eigene Erfahrung einfließen zu lassen.

Im Folgenden wird die Funktion 40 in Figur 4, das heißt die Bestimmung der Modellgüte, noch einmal näher erläutert. Für eine Abschätzung der Güte des vom Engineering-Werkzeug identifizierten Modells sollen die Fehler der Modellparameter des FSR-Modells ("finite step response") auf Basis von Modellen erster Ordnung mit Totzeit abgeschätzt werden. Die Abschätzung erfolgt dabei durch einen Vergleich der Messdaten mit den simulierten Ergebnissen des Modells des Reglers und unterteilt sich in Fehler der Verstärkung, der Totzeit und der Zeitkonstante. Dafür werden, wie bereits oben beschrieben, die aufgezeichneten Sprünge und Sprungantworten der Messdaten mit entsprechenden Simulationsdaten verglichen. Für ein gutes Gelingen dieses Verfahrens wird durch geeignete Bedienung sichergestellt, dass die für die Identifikation aufgezeichneten Daten folgende Bedingungen erfüllen:

- die gesamte Dynamik wird erfasst,
- das Anregungssignal besteht nur aus Sprüngen und ist ansonsten konstant und
- die Anregung durch die unterschiedlichen Stell- und Störgrößen erfolgt nur nacheinander und nicht gleichzeitig.

Um das Erfüllen dieser Bedingungen zu gewährleisten, kann eine automatische Anregungsgenerierung vorgesehen werden.

Für jeden yu-Kanal (jede Teil-Übertragungsfunktion) muss ein Modell der Form

$$y_i = \sum_j \frac{K_{ij}}{1 + T_{d,ij} s} e^{-\tau_{ij} s} u_j$$

gefunden werden. Dies ist möglich, wenn die einzelnen Stellkanäle nacheinander mit Sprüngen angeregt werden.

Zunächst müssen dazu die vom MPC-Konfigurator identifizierten FSR-Modelle in die gewünschte Form approximiert werden. Dazu müssen die simulierten Ergebnisse dieser Modelle in Kombination mit der aufgezeichneten Folge von Stellgrößen-Sprüngen mittels der "prediction error" Methode neu identifiziert werden. Ein Körrelationskoeffizient zeigt, wie gut diese Approximation das wahre Simulationsmodell wiedergibt.

Im nächsten Schritt werden die aufgezeichneten Messdaten sowie die mit den im MPC-Konfigurator identifizierten Modellen generierten Simulationsdaten hinsichtlich der drei Charakteristika Totzeit, Prozessverstärkung und Zeitkonstante ausgewertet und deren Abweichung ermittelt.

- Totzeit $\tau_{ij}$: Der Zeitversatz zwischen der Sprungvorgabe in der Stellgröße bis zu einer erkennbaren Reaktion in der Regelgröße beschreibt die Totzeit. Dazu wird die Steigung der Regelgrößen nach einem Sprung in einer Stellgröße untersucht.

- Prozessverstärkung $K_{ij}$: Die Differenz der beiden stationären Zustände der Regelgröße, bezogen auf die Sprunghöhe der Stellgröße ergibt die Prozessverstärkung. Dazu werden die maximalen und minimalen Regelgrößen-Werte innerhalb des stationären Zustandes ausgewertet und miteinander verglichen.

- Zeitkonstante $T_{d,ij}$ : Zur Bestimmung der Zeitkonstante wird das approximierte Integral zwischen der y-Kurve, dem Zeitpunkt, an dem die Totzeit vorbei ist, sowie der waagrechten Geraden durch den Endpunkt der Sprungantwort herangezogen. Die Approximation erfolgt durch Summation der Flächeninhalte von in diesem Gebiet liegenden Rechtecken.

Diese Auswertung wird sowohl für die Mess- als auch für die Simulationsdaten durchgeführt und daraus die maximale Abweichung zwischen beiden berechnet. Für die Bestimmung der Parameterschwankungen wird diese maximale Abweichung für eine mögliche Änderung in beiden Richtungen ausgehend vom Wert der approximierten Modelle angenommen.

Zur Visualisierung der erzielten Ergebnisse werden die Sprungantworten sowohl des approximierten PT1Tt-Modells als auch die Sprungantworten derjenigen PT1Tt-Modelle mit den größten Parameterabweichungen zusammen aufgetragen.

Zur Parametrierung der Modellfehleranalyse stehen mehrere Schwellwerte sowie Filterparameter (z.B. Mittelwert der n maximalen Verstärkungen während dem stationären Zustand wird als maximaler Wert verwendet) zur Verfügung, um bestimmte Merkmale zu erkennen und den Einfluss von Messdatenrauschen zu verringern.

Berechnung einer unteren Schranke für die Bestrafung der Stellgrößenänderung:

Die Berechnung der Stellgrößenbestrafung, im Folgenden Q-Werte genannt, unterteilt sich in zwei Schritte. Zunächst müssen die Werte für den Idealfall (ohne Modellfehler) bestimmt werden, um anschließend daraus die robuste Parametrierung zu berechnen.

Berechnung der Q-Werte für den Idealfall:

Die Berechnung erfolgt nach Shridhar, R., Cooper, D. J., "A Tuning Strategy for Unconstrained Multivariable Model Predictive Control", Ind. Eg. Chem. Res., Bd. 37, Seiten 4003 - 4016, 1998, wie bereits oben beim ersten Schritt, das heißt bei der automatischen Bestimmung der Gewichtungsfaktoren $q_{ii}$ für den Idealfall, beschrieben.

Während der Herleitung der Formel für den Idealfall wird für eine Vereinfachung angenommen, dass der Prädiktionshorizont möglichst groß und die Abtastzeit des Reglers möglichst klein gewählt werden (ideale Bedingungen für den Regler). Weiterhin findet eine Approximation der Q-Werte nach unten statt, um die besagte Formel zu vereinfachen. Da in unserem Fall nicht die Einstellung für ein völlig überschwingfreies Führungsverhalten gesucht wird (dies würde eine online Parametrierung über die Sollwert-Vorfilter und somit die Entscheidung zwischen Performance und Dynamik durch den Anwender nicht mehr möglich machen) ist diese Abschätzung nach unten gültig.

Analytische Formel zur Berechnung der robusten Parametrierung:

Um ein robustes Verhalten zu garantieren, muss eine Umrechnung des nach Shridhar im vorherigen Abschnitt berechneten performancebasierten Q auf ein robustes Q auf Basis der analysierten Modellunsicherheiten erfolgen. Diese Umrechnung ist vorteilhaft möglichst analytisch und weist nur wenig empirischen Charakter auf. Dazu wird folgender Ansatz gewählt, welcher aus zwei verschiedenen Blickwinkeln erklärt werden wird. Die Reglergleichung für einen idealen Prozess ohne Modellunsicherheiten ergibt sich zu

$$\Delta \underline{u} = \left(\underline{G}^T \underline{R}\underline{G} + \underline{Q}\right)^{-1} \underline{G}^T \underline{R}\left(\underline{w} - \underline{f}\right).$$

Dabei umfasst die Matrix $\underline{G}$ die Sprungantwortkoeffizienten des Prozessmodells. Liegt nun ein realer Prozess mit beliebigen Fehlern in den Modellparametern vor, so führt dies immer zu einer additiven Verschiebung der Sprungantwortkoeffizienten. Damit ergibt sich die Reglergleichung für einen realen Prozess zu

$$\Delta \underline{u} = \left(\left(\underline{G} + \Delta \underline{G}\right)^T \underline{R}\left(\underline{G} + \Delta \underline{G}\right) + \hat{\underline{Q}}\right)^{-1} \left(\underline{G} + \Delta \underline{G}\right)^T \underline{R}\left(\underline{w} - \underline{f}\right).$$

Dabei ergibt sich das wahre Prozessverhalten aus der Addition der Sprungantwortkoeffizienten des im Regler verwendeten Prozessmodells $\underline{G}$ zuzüglich eines Fehlers $\Delta \underline{G}$. Ziel ist es nun, die Größe der Stellgrößenänderungen trotz der Modellunsicherheiten gleich derjenigen bei Verwendung des idealen Prozessmodells zu halten. Würde es aufgrund der Unsicherheiten zu einem zu starken oder zu schwachen Regeleingriff kommen, könnte dies ansonsten im harmlosen Fall zu Einbußen in der Performance oder schwerwiegender in der Stabilität führen. Das Gleichsetzen ergibt den Term

$$\left(\left(\underline{G} + \Delta \underline{G}\right)^T \underline{R}\left(\underline{G} + \Delta \underline{G}\right) + \hat{\underline{Q}}\right)^{-1} \left(\underline{G} + \Delta \underline{G}\right)^T \overset{!}{=} \left(\underline{G}^T \underline{R}\underline{G} + \underline{Q}\right)^{-1} \underline{G}^T.$$

Eine Erweiterung auf beiden Seiten der Gleichung, um eine Umformung zu ermöglichen, resultiert in

$$\left(\left(\underline{G} + \Delta \underline{G}\right)^T \underline{R}\left(\underline{G} + \Delta \underline{G}\right) + \hat{\underline{Q}}\right)^{-1} \left(\underline{G} + \Delta \underline{G}\right)^T \underline{G} \overset{!}{=} \left(\underline{G}^T \underline{R}\underline{G} + \underline{Q}\right)^{-1} \underline{G}^T \underline{G}.$$

Auflösen nach der gesuchten Größe $\hat{\underline{Q}}$ resultiert in

$$\hat{\underline{Q}} = \underline{G}^T \underline{G}\left(\left(\underline{G} + \Delta \underline{G}\right)\underline{G}\right)^{-1} \left(\left(\underline{G} + \Delta \underline{G}\right)^T \underline{R}\left(\underline{G} + \Delta \underline{G}\right) + \underline{Q}\right) - \underline{G}^T \underline{R}\underline{G}$$

für die Berechnung der robusten Parametrierung der Stellgrößengewichtung basierend auf den Modellunsicherheiten $\Delta \underline{G}$ und den Q-Werten für gute Performance $\underline{Q}$.

Eine nähere Betrachtung dieser Formel zeigt, dass es zwei mögliche Modellfehler zu berücksichtigen gibt: positive und negative. Ebenso ist es möglich, dass der robuste Q-Wert kleiner als der Wert für gute Performance werden kann. Dies besagt, dass es auch "gutmütige" Modellfehler gibt, welche die Robustheit erhöhen. Daher ist es für die Anwendung dieser analytischen Formel wichtig zu wissen, welche Fehler sich positiv und welche sich negativ auf die Robustheit des Systems auswirken. Dies wird im folgenden Abschnitt ausgewertet werden. Doch zunächst soll die hier aufgeführt Herleitung unter einem anderen Aspekt beleuchtet werden.

Unter der Annahme, dass dem Regler das Modell zur Verfügung steht, welches hinsichtlich seiner Modellfehler die negativsten Auswirkungen auf den Regelkreis (hinsichtlich Performance und Stabilität) aufzeigt, soll nun die Herleitung neu betrachtet werden. Dieses "worst-case"-Modell entspricht in der Herleitung $(\underline{G}+\Delta \underline{G})$. Nun ist es das Ziel, die Sprungantwort dieses Reglers über die Parametrierung der Q-Werte derart zu verschieben, dass sie der idealen Sprungantwort des Reglers bei Kenntnis des wahren $\underline{G}$ entspricht. Dies gelingt ebenso über das Gleichsetzen beider Terme und das Auflösen nach dem gesuchten neuen Q-Werten $\hat{\underline{Q}}$.

Für die Anwendung im neuen MPC-Konfigurator muss die obige Gleichung noch leicht abgeändert werden. Die hier berechneten Q-Werte können alternativ als Vorschläge für den Anwender dienen und nicht direkt in die Berechnung des Reglers einfließen. Würde die obige Gleichung direkt in dieser MIMO-Schreibweise angewendet werden, so wäre die resultierende Matrix $\hat{\underline{Q}}$ von der Dimension $\llcorner n_u{}^*n_p \times n_u{}^*n_p \lrcorner$. Eine genaue Berechnungsformel zum Umrechnung dieser nicht diagonalähnlichen Matrix mit sich über den Steuerhorizont ändernden Elementen in die für den Anwender bekannte und übersichtliche Darstellung einer Diagonalmatrix der Dimension $[n_u \times n_u]$ liegt nicht vor. Daher soll die obige Gleichung für jede Teilübertragungsfunktion separat betrachtet werden. Ebenso werden die Sprungantwortkoeffizienten nicht in jedem Abtastschritt des Modells berücksichtigt sondern nur in jedem Abtastschritt des Reglers $T_C$ sowie nur innerhalb des Prädiktionshorizontes $n_p$. Damit resultiert die Berechnung der robusten Q-Werte der Diagonalmatrix zu

$$
\begin{aligned}
\hat{Q}(i,i) = \sum_{j=1}^{n_y} \big[ &G_{1:T_C:n_p}(j,i)^T \, G_{1:T_C:n_p}(j,i)\big(\big(G_{1:T_C:n_p}(j,i) + \Delta G_{1:T_C:n_p}(j,i)\big)G_{1:T_C:n_p}(j,i)\big)^{-1} \bullet \\
&\big(\big(G_{1:T_C:n_p}(j,i) + \Delta G_{1:T_C:n_p}(j,i)\big)^T R(j,j)\big(G_{1:T_C:n_p}(j,i) + \Delta G_{1:T_C:n_p}(j,i)\big) + Q(j,i)\big) \\
&- G_{1:T_C:n_p}(j,i)^T R(j,j)G_{1:T_C:n_p}(j,i)\,\big]
\end{aligned}
$$

Dabei sind $Q(j,i)$ die einzelnen Summanden der Formel für das ideale $Q$ gemäß Shridhar, d.h. sie beziehen sich auf eine einzelne Teilübertragungsfunktion $G(j,i)$.

Bestimmung des "worst-case"-Falles:

Für den "worst-case"-Fall interessiert die maximale Abweichung von der idealen Sprungantwort. Damit sind auch nur die maximalen Abweichungen in Verstärkung, Totzeit und Zeitkonstante relevant. Eine maximale Verschiebung der Sprungantwort bei einem negativen Fehler in der Verstärkung (die Verstärkung des Reglermodells ist kleiner als die des wahren Prozesses) ergibt sich bei einem gleichzeitigen positiven Fehler in der Totzeit (die Totzeit des Modells ist größer als die des wahren Prozesses) und in der Zeitkonstante (die Zeitkonstante des Modells ist größer als die des wahren Prozesses). Dementsprechend ergibt sich die maximale Verschiebung der Sprungantwort bei einem positiven Fehler in der Verstärkung bei einem gleichzeitigen negativen Fehler in der Totzeit und in der Zeitkonstante.

Als mögliche "worst-case"-Fälle verbleiben somit nur noch die maximale oder die minimale Sprungantwort. Zur Auswahl der Sprungantwort mit dem negativsten Einfluss auf den Regelkreis wird im Folgenden ein Gedankenexperiment zu jedem der drei fehlerhaften Parameter durchgeführt.

- Verstärkung

Annahme: Die Verstärkung des Reglermodells ist zu groß.
→ Der Regler vermutet einen größeren Einfluss seiner Stellgrößenänderung als er tatsächlich im wahren Prozess erfolgt. Daher wird er eher eine kleinere Stellgrößenänderung vorgeben, was einem robusteren Verhalten entspricht.
Annahme: Die Verstärkung des Reglermodells ist zu klein.
→ Der Regler vermutet einen kleineren Einfluss seiner Stellgrößenänderung als es tatsächlich im wahren Prozess erfolgt. Daher wird der Regler zu große Stellgrößenänderungen vorgeben, was ggf. zu Schwingungen führen kann.

- Totzeit

Annahme: Die Totzeit des Reglermodells ist zu klein.
→ Der Regler vermutet einen schnelleren Einfluss seiner Stellgrößenänderung als es tatsächlich im wahren Prozess erfolgt. Das Ausbleiben einer so frühen Reaktion wird durch die Rückführung der Istwerte bemerkt werden, so dass leichte Korrekturen durchgeführt werden können. Allerdings wirkt sich dieser Fehler trotzdem störend aus.
Annahme: Die Totzeit des Reglermodells ist zu groß.
→ Der Regler vermutet einen späteren Einfluss seiner Stellgrößenänderung als dies tatsächlich im wahren Prozess erfolgen wird. Wird der Fehler bemerkt, so hat sich das Prozessverhalten bereits geändert und eine Korrektur ist kaum oder sogar gar nicht mehr möglich. Somit ist diese Fehlerart noch gravierender als zu kleine Totzeiten zu betrachten.

- Zeitkonstante

Annahme: Die Zeitkonstante des Reglermodells ist zu klein.
→ Der Regler vermutet einen schnelleren Einschwingvorgang als dies tatsächlich im wahren Prozess erfolgt. Daher wird er Stellgrößenänderungen für kürzere Zeit ausgeben, d.h. im zeitlichen Mittel kleinere Stellgrößenänderungen. Dies führt eher zu einer Verbesserung der Robustheit.
Annahme: Die Zeitkonstante des Reglermodells ist zu groß.
→ Der Regler vermutet einen langsameren Einschwingvorgang als dies tatsächlich im wahren Prozess erfolgt. Daher wird er Stellgrößenänderungen für längere Zeit ausgeben, d.h. im zeitlichen Mittel größere Stellgrößenänderungen. Dies führt zu einer Verschlechterung der Robustheit.

Die hier aufgeführten Gedanken wurden anhand eines Beispielprozesses (Destillationskolonne) bestätigt. Sie besagen, dass der "worst-case"-Fall durch eine zu niedrige Sprungantwort im Reglermodell herbeigeführt wird, d.h. durch eine zu klein angenommene Verstärkung und eine zu groß angenommen Totzeit und Zeitkonstante.

Anzumerken ist, dass z.B. bei stark verkoppelten Modellen und ungünstiger Startparametrierung der Q-Werte zwar prinzipiell derselbe Zusammenhang gilt, aber durch den starken Einfluss zwischen den einzelnen Teilübertragungsfunktionen es zu teilweise gegensätzlichem Verhalten kommen kann. So kommt es durch einen starken Fehler in einem Kanal dort zwar zu einer Verschlechterung der Robustheit aber dadurch in einem anderen Kanal zu einer gleichzeitigen Verbesserung der Robustheit. Dies ist aber nicht als Einschränkung des Verfahrens zu verstehen, da prinzipiell eine Erhöhung der Q-Werte immer zu einem robusteren Verhalten führt. Eine starke Verkopplung kann durch dieses Verfahren natürlich nicht aufgehoben werden, aber eine geeignete Parametrierung dafür gefunden werden.

Ebenso zeigt sich (wie zuvor schon anhand der analytischen Formel erwähnt), dass für bestimmte Kombinationen von Fehlern und Parametrierung von Q die Robustheit zunimmt. Für solche Systeme soll dann aber (um den Anwender nicht zu verwirren) der höhere Q-Wert hinsichtlich der Performance (Idealfall) beibehalten werden.

Um nun die Interpretation der analytischen Formel zu konkretisieren wird diese noch einmal kurz zusammengefasst. Es wird angenommen, dass der Regler basierend auf den maximalen Modellfehlern eine zu kleine Sprungantwort (des Prozesses) annimmt. Daher wird die Sprungantwort des Reglermodells mittels der Q-Parametrierung Richtung idealer Sprungantwort verschoben, um ein robusteres Verhalten zu erhalten.

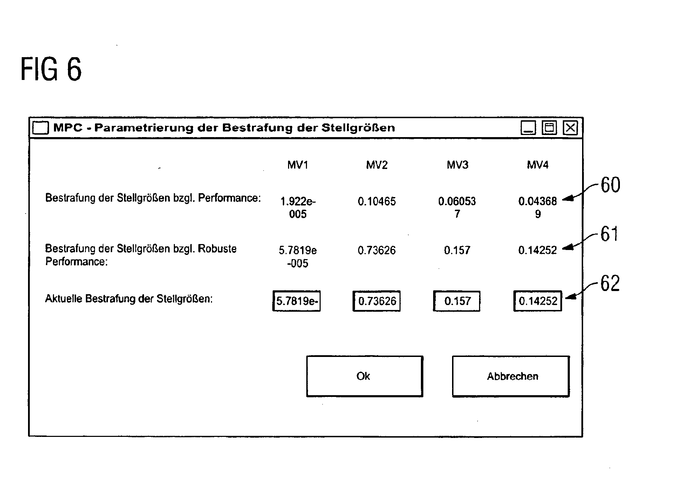

Das neue Engineering-Werkzeug wurde als Erweiterung des bekannten MPC-Konfigurators prototypisch implementiert. Die automatische Bestimmung der Gewichtungsfaktoren wird nach erfolgter Identifikation automatisch aufgerufen und deren Ergebnisse werden in einem Ausgabefenster einer graphischen Benutzeroberfläche, das in Figur 5 dargestellt ist, an den Bediener ausgegeben. Dazu wurde die Benutzeroberfläche des bekannten MPC-Konfigurators um die mit Rahmen hervorgehobenen Ein-/Ausgabefelder erweitert. Die Rahmen sind jeweils mit Bezugszeichen versehen. Mit den beiden zusätzlichen Schaltflächen in den Rahmen 51 bzw. 52 können die Modellunsicherheiten bzw. die Modellapproximation in Form von PT1Tt-Modellen angezeigt werden. Die bisherigen Eingabefenster im Rahmen 53 für die Gewichtungsfaktoren sind nun als Schaltflächen realisiert, welche die automatisch bestimmten Gewichtungsfaktoren anzeigen. Beim Betätigen dieser Knöpfe öffnet sich ein weiteres Fenster, das in Figur 6 dargestellt ist und in welchem in der oberen Zeile 60 die berechneten Gewichtungsfaktoren für den Idealfall und in der zweiten Zeile 61 die berechneten Gewichtungsfaktoren für eine robuste Parametrierung angezeigt werden. In der dritten Zeile 62 können durch den Bediener auf seiner Erfahrung basierende Alternativwerte für die Gewichtungsfaktoren eingegeben werden. Die vollständig automatische Bestimmung der Gewichtungsfaktoren hat dabei den Vorteil, dass sie bei einer Änderung der Regelgrößengewichtung oder der Abtastzeit des Reglers automatisch angepasst werden. Entsprechende Eingaben in den Feldern in den Rahmen 54 bzw. 55 in Figur 5 fließen somit automatisch in die Bestimmung der Gewichtungsfaktoren ein.

Im Folgenden sollen noch einmal die vorteilhaften Eigenschaften des neuen Engineering-Werkzeugs zusammengefasst werden. Ein deutlicher Vorteil ist die leichte Verständlichkeit der Bestimmung der Güte des Modells. Anders als in den bereits oben genannten Veröffentlichungen von Wojsznis sind keine komplexen mathematischen Berechnungen dazu erforderlich, sondern es wird das geschulte Auge des erfahrenen Bedieners nachgebildet, was zu sehr gut nachvollziehbaren Ergebnissen führt. Zudem erfolgt keine empirische Berechnung der Q-Werte, da im Allgemeinen mit empirischen Studien nicht alle relevanten Fälle abgedeckt werden können und es somit beim empirischen Ansatz zu Fehlberechnungen kommen kann. Vielmehr wird bei dem hier beschriebenen Engineering-Werkzeug ein analytischer Zusammenhang hergestellt, welcher für alle Anwendungsfälle Gültigkeit besitzt.

In einem praktischen Vergleich wurde für eine Destillationskolonne sowie für einen Polymerisationsreaktor ein modellbasierter Prädiktivregler, der mit dem bekannten MPC-Konfigurator per Hand eingestellt wurde, mit einem Regler, der mit dem neuen Engineering-Werkzeug parametriert wurde, gegenübergestellt. Dabei wurde festgestellt, dass die Grunddynamik des neuen Reglers etwas langsamer ist und dieser nach einem Sollwertsprung einen geringfügig verzögerten Anstieg zeigt. Trotzdem erreicht die Regelgröße ihr gefordertes Ziel schneller. Mit der auf die neue Art und Weise eingestellten Parametrierung kann bereits ein gutes Regelungsergebnis erzielt werden, welches dem der Handparametrierung überlegen oder zumindest sehr ähnlich ist. Gleichzeitig konnte bei einem Vergleich der Stellgrößen erkannt werden, dass der mit dem neuen Engineering-Werkzeug eingestellter Regler deutlich ruhiger eingreift und somit weniger Stellenergie in Anspruch nehmen muss. Durch eine Verwendung eines Vorfilters bei dem neuartig eingestellten Regler könnte die Dynamik je nach Wünschen des Anwenders noch weiter abgeschwächt werden.

Bei dem bekannten MPC-Konfigurator gab es zwei gravierende Hindernisse für eine schnellere Verbreitung modellbasierter Prädiktivregler bei Anwendungen in der Prozessautomatisierung. Die vom Anwender zu tätigende Parametrierung des Reglers erforderte regelungstechnisches Know-how sowie oftmals die Durchführung von "trial and error"-Versuchen in der Simulation und am wahren Prozess. Ebenso war es schwierig, Modelle zu identifizieren, die das Prozessverhalten mit hoher Güte beschreiben. Fehlerhafte Modelle führten aber ohne Berücksichtigung der Robustheit beim Reglerentwurf zu Verlusten in der Performance und evtl. sogar in der Stabilität.

Mit dem neuen Engineering-Werkzeug werden dagegen aufbauend auf einer Analyse von Mess- und Simulationsdaten die Modellunsicherheiten des identifizierten Modells bestimmt. Dazu wird zwischen Fehlern in den Verstärkungen, den Totzeiten und den Zeitkonstanten unterschieden. Zur Gewährleistung einer guten Robustheit des Prädiktivreglers gegenüber Modellfehlern wird eine geeignete Startparametrierung für die Gewichtungsfaktoren der Stellgrößenbestrafungen in Abhängigkeit der Modellunsicherheiten derart angepasst, dass die Stärke des Stelleingriffes derjenigen im Idealfall, das heißt derjenigen bei einem fehlerfreien Modell, entspricht. Auf dieser Basis wird nun der modellbasierte Prädiktivregler parametriert oder die so bestimmten Gewichtungsfaktoren werden dem Anwender als Vorschläge zur Verfügung gestellt, welche dieser nach eigenem Erfahrungswissen anpassen kann. Somit ist es nun für den Anwender möglich, gute Parametrierungen ohne spezifisches Fachwissen und ohne viele Testversuche zu erhalten. Damit ist die Einstiegshürde zur Verwendung eines modellbasierten Prädiktivreglers gegenüber bisherigen Engineering-Werkzeugen deutlich reduziert worden.

## Patentansprüche

1. Engineering-Werkzeug zur Parametrierung eines modellbasierten Prädiktivreglers (21) zur Regelung eines verfahrenstechnischen Prozesses (22), welches Mittel (27) zur Bestimmung der Güte des Modells aufweist, das der modellbasierte Prädiktivregler für das Verhalten des zu regelnden verfahrenstechnischen Prozesses enthält, wobei die Mittel (27) zur Bestimmung der Güte des Modells dazu ausgebildet sind, anhand von Messdaten Fehler verschiedener Modellparameter als Modellfehler zu ermitteln, und
welches Mittel (28) zur automatischen Bestimmung von Gewichtungsfaktoren aufweist, mit denen in einem Gütekriterium, dessen Minimierung das Entwurfsziel des modellbasierten Prädiktivreglers ist, Stellgrößenänderungen gewichtet werden, wobei die Bestimmung der Gewichtungsfaktoren von der jeweils bestimmten Güte des Modells abhängig ist, **dadurch gekennzeichnet,**
**dass** die Mittel (28) zur automatischen Bestimmung von Gewichtungsfaktoren dazu ausgebildet sind, einen "worst-case"-Fall der Modellfehler zu bestimmen und die Gewichtungsfaktoren derart zu bestimmen, dass die Stellgrößenänderungen eines unter Berücksichtigung der Modellfehler des "worst-case"-Falls entworfenen modellbasierten Prädiktivreglers im Wesentlichen dieselben sind wie diejenigen eines Prädiktivreglers, der bei Annahme eines fehlerfreien Modells entworfen ist.

2. Engineering-Werkzeug nach Anspruch 1, **dadurch gekennzeichnet, dass** die Mittel (27) zur Bestimmung der Güte des Modells dazu ausgebildet sind, bei Stellgrößensprüngen in Messdaten (29), die an dem zu regelnden verfahrenstechnischen Prozess (22) aufgenommen sind, entsprechende Stellgrößensprünge auf das Modell aufzuschalten und die Sprungantworten des Prozesses mit den jeweils entsprechenden Sprungantworten der Teilübertragungsfunktionen des Prozessmodells zu vergleichen und mithilfe von approximierten PT1Tt-Modellen der Teilübertragungsfunktionen auszuwerten.

3. Engineering-Werkzeug nach Anspruch 1 oder 2, **dadurch gekennzeichnet, dass** die Gewichtungsfaktoren auf ein Bediengerät (26) ausgebbar und durch einen Bediener veränderbar sind.

4. Verfahren zur Parametrierung eines modellbasierten Prädiktivreglers (21) zur Regelung eines verfahrenstechnischen Prozesses (22), bei welchem die Güte des Modells bestimmt wird, welches der modellbasierte Prädiktivregler für das Verhalten des zu regelnden verfahrenstechnischen Prozesses enthält, wobei anhand von Messdaten Fehler verschiedener Modellparameter als Modellfehler ermittelt werden, und bei welchem Gewichtungsfaktoren automatisch bestimmt werden, mit denen in einem Gütekriterium, dessen Minimierung das Entwurfsziel des modellbasierten Prädiktivreglers ist, Stellgrößenänderungen gewichtet werden, wobei die Bestimmung der Gewichtungsfaktoren von der jeweils bestimmten Güte des Modells abhängig ist, **dadurch gekennzeichnet, dass** ein "worst-case"-Fall der Modellfehler bestimmt wird und dass die Gewichtungsfaktoren derart bestimmt werden, dass die Stellgrößenänderungen eines unter Berücksichtigung der Modellfehler des "worst-case"-Falls entworfenen modellbasierten Prädiktivreglers im Wesentlichen dieselben sind wie diejenigen eines Prädiktivreglers, der bei Annahme eines fehlerfreien Modells entworfen ist.

## Claims

1. Engineering tool for parameterizing a model-based predictive controller (21) for controlling a process engineering process (22), which engineering tool has means (27) for determining the quality of the model that the model-based predictive controller contains for the response of the process engineering process to be controlled, wherein the means (27) for determining the quality of the model are designed to use measurement data to ascertain errors in various model parameters as model errors, and

which engineering tool has means (28) for automatically determining weighting factors which are used to weight manipulated variable changes in a quality criterion, the minimization of which is the design aim of the model-based predictive controller, wherein the determination of the weighting factors is dependent on the respectively determined quality of the model, **characterized in that** the means (28) for automatically determining weighting factors are designed to determine a "worst-case" situation for the model errors and to determine the weighting factors such that the manipulated variable changes in a model-based predictive controller designed taking account of the model errors of the "worst-case" situation are essentially the same as those in a predictive controller which has been designed on the assumption of an error-free model.

2. Engineering tool according to Claim 1, **characterized in that** the means (27) for determining the quality of the model are designed to take manipulated variable step changes in measurement data (29) which are recorded from the process engineering process (22) to be controlled and to connect corresponding manipulated variable step changes to the model, and to compare the step responses of the process with the respective corresponding step responses of the transfer function elements from the process model and to evaluate said former step responses by using approximated PT1Tt models of the transfer function elements.

3. Engineering tool according to Claim 1 or 2, **characterized in that** the weighting factors can be output to an operator control appliance (26) and can be altered by an operator.

4. Method for parameterizing a model-based predictive controller (21) for controlling a process engineering process (22), which method involves determining the quality of the model that the model-based predictive controller contains for the response of the process engineering process to be controlled, wherein measurement data are used to ascertain errors in various model parameters as model errors, and which method involves automatically determining weighting factors which are used to weight manipulated variable changes in a quality criterion, the minimization of which is the design aim of the model-based predictive controller, wherein the determination of the weighting factors is dependent on the respectively determined quality of the model, **characterized in that** a "worst-case" situation for the model errors is determined and **in that** the weighting factors are determined such that the manipulated variable changes in a model-based predictive controller designed taking account of the model errors of the "worst-case" situation are essentially the same as those in a predictive controller which has been designed on the assumption of an error-free model.

**Revendications**

1. Outil d'ingénierie pour paramétrer un régulateur (21) prédictif reposant sur un modèle en vue de réguler une opération (22) en technique de procédé, qui a des moyens (27) de détermination de la qualité du modèle que le régulateur prédictif reposant sur un modèle contient pour le comportement de l'opération en technique de procédé à régler, les moyens (27) de détermination de la qualité du modèle étant constitués pour déterminer comme erreurs de modèle des erreurs de divers paramètres du modèle au moyen de données de mesure, et

qui a des moyens (28) de détermination automatique de facteurs de pondération, par lesquels, dans un critère de qualité dont la minimisation est le but de conception du régulateur prédictif reposant sur un modèle, des variations de grandeurs de régulation sont pondérées, la détermination des facteurs de pondération dépendant de la qualité déterminée respectivement du modèle, **caractérisé**

**en ce que** les moyens (28) de détermination automatique de facteurs de pondération sont constitués pour déterminer un cas "worst-case" des erreurs du modèle et pour déterminer les facteurs de pondération, de manière à ce que les modifications de grandeurs de régulation d'un régulateur prédictif reposant sur un modèle conçu en tenant compte des erreurs de modèle du cas "worst-case" soient sensiblement les mêmes que celles d'un régulateur prédictif, qui est conçu en supposant un modèle sans erreur.

2. Outil d'ingénierie suivant la revendication 1, **caractérisé en ce que** les moyens (27) de détermination de la qualité du modèle sont constitués pour, s'il se produit des sauts des grandeurs de régulation dans des données (29) de mesure qui sont enregistrées sur l'opération (22) en technique de procédé à réguler, mettre des sauts de grandeurs de régulation correspondants sur le modèle et comparer les réponses en sauts de l'opération aux réponses en sauts correspondantes respectivement des sous-fonctions de transfert du modèle de l'opération et les exploiter à l'aide de modèles PT1Tt d'approximation des sous-fonctions de transfert.

**3.** Outil d'ingénierie suivant la revendication 1 ou 2, **caractérisé en ce que** les facteurs de pondération sont émis sur un appareil (26) de commande et peuvent être modifiés par un opérateur.

**4.** Procédé de paramétrisation d'un régulateur (21) prédictif reposant sur un modèle en vue de la régulation d'une opération (22) en technique de procédé, dans lequel on détermine la qualité du modèle, qui contient le régulateur prédictif reposant sur un modèle, pour le comportement de l'opération en technique de procédé à réguler, dans lequel on détermine comme erreurs du modèle au moyen de données de mesure des erreurs de divers paramètres du modèle et dans lequel on détermine automatiquement des facteurs de pondération, par lesquels, dans un critère de qualité dont la minimisation est le but de conception du régulateur prédictif reposant sur un modèle, on pondère des modifications de grandeurs de régulation, la détermination des facteurs de pondération dépendant de la qualité déterminée respectivement du modèle, **caractérisé en ce qu'**on détermine un cas "worst-case" des erreurs du modèle et ce qu'on détermine des facteurs de pondération, de manière à ce que les modifications des grandeurs de régulation d'un régulateur prédictif reposant sur un modèle développé en tenant compte des erreurs de modèle du cas "worst-case" soient sensiblement les mêmes que celles d'un régulateur prédictif, qui est développé en supposant un modèle sans erreur.

## FIG 1
(Stand der Technik)

## FIG 2

## FIG 3

# FIG 4

# FIG 5

EP 2 553 535 B1

# FIG 6

| | MV1 | MV2 | MV3 | MV4 |
|---|---|---|---|---|

**MPC - Parametrierung der Bestrafung der Stellgrößen**

Bestrafung der Stellgrößen bzgl. Performance: 1.922e-005 | 0.10465 | 0.060537 | 0.043689 — 60

Bestrafung der Stellgrößen bzgl. Robuste Performance: 5.7819e-005 | 0.73626 | 0.157 | 0.14252 — 61

Aktuelle Bestrafung der Stellgrößen: 5.7819e- | 0.73626 | 0.157 | 0.14252 — 62

Ok    Abbrechen

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WOJSZNIS, W. ; GUDAZ, J. ; MEHTA, A. ; BLEVNIS, T.** Practical Approach to Tuning MPC. *ISA Transactions,* 2003
- **WOJSZNIS, W. ; MEHTA, A.** Developing Confidence Intervals for Process Model Validation. *ISA Conference,* 2002
- **SHRIDHAR, R. ; COOPER, D. J.** A Tuning Strategy for Unconstrained SISO Model Predictive Control. *Ind. Eng. Chem. Res.,* 1997, vol. 36, 729-746
- A Tuning Strategy for Unconstrained Multivariable Model Predictive Control. *Ind. Eng. Chem. Res.,* 1998, vol. 37, 4003-4016
- **SHRIDHAR, R. ; COOPER, D. J.** A Tuning Strategy for Unconstrained Multivariable Model Predictive Control. *Ind. Eg. Chem. Res.,* 1998, vol. 37, 4003-4016